# EUROPEAN PATENT SPECIFICATION

(11) **EP 2 972 612 B1**
(45) Date of publication and mention of the grant of the patent: **18.05.2016**
(21) Application number: 13709082.5
(22) Date of filing: 11.03.2013
(51) Int. Cl.: G05B 19/409, G05B 23/02

(54) **PROCESS CONTROL OBJECT SEARCH**
PROZESSSTEUERUNGSOBJEKTSUCHE
RECHERCHE D'OBJETS DE COMMANDE DE PROCESSUS

(43) Date of publication of application: 20.01.2016
(73) Proprietor: ABB Technology Ltd., 8050 Zürich (CH)
(72) Inventor: VARTIAINEN, Elina, S-722 18 Västerås (SE); LARSSON, Magnus, S-725 91 Västerås (SE); ALFREDSSON, Fredrik, S-724 71 Västerås (SE); BRÖNMARK, Jonas, S-722 27 Västerås (SE)
(74) Representative: Lundqvist, Alida Maria Therése
(86) International application number: PCT/EP2013/054829
(87) International publication number: WO 2014/139551

(56) References cited:
- EP-A2- 2 071 427
- GB-A- 2 452 635
- US-A1- 2003 061 295
- US-A1- 2009 284 390
- US-A1- 2012 059 591
- US-A1- 2012 078 869

## Description

### FIELD OF THE INVENTION

The present invention generally relates to process control systems. More particularly the present invention relates to a method, searching arrangement and a computer program product for searching for process control objects in a process control system.

### BACKGROUND

A process control system normally comprises a number of process control objects involved in the control of the process.

In process control systems there are furthermore maintenance engineers that are most of the time working on the process floor close to these process control objects, which is typically far away from control rooms with work stations and other computers from which the system is monitored. The maintenance engineers make sure the process runs as smooth as possible by both preventive and direct maintenance.

Plant maintenance engineers thus work to ensure that the process is running as uninterrupted and smooth as possible. They are furthermore nowadays provided with wireless terminals for assisting them with various tasks in relation to the process control system. These wireless terminals may for instance harbor or access a search function for finding process control objects in the system.

A process control system may comprise several process control objects of the same type. For instance, the number of boilers can be tens or hundreds. This means that it may be hard for the maintenance engineer to be able to detect objects of interest that are searched for. This may especially be the case when the search is made via a wireless terminal having a small display. US 2009/0077055, WO2007/121212 and GB 2483971 are all directed towards searching for objects in a process control system.

The documents US 2012/271836 A1 (see paragraphs 25, 50-52, 67-72 and fig. 1-3) and WO 00/41090 A1 (see page 1, line 22 to page 2, line 3; page 5, line 6 to page 6, line 4; page 11, line 19 to page 12, line 20; page 52, line 21, to page 53, line 15; page 54, lines 9-14; page 74, lines 1-9) disclose the concepts of location-based or proximity searches, wherein the search results are generated from a search query having search term and distance threshold limitation from the automatically detected position of the user terminal.

The documents GB 2 452 635 A (see paragraphs 11-17), US 2003/061295 A1 (see paragraph 42) and US 2012/059591 A1 (see paragraphs 40, 41) disclose the concept of user location dependent access control in a process control system, by providing access to control objects in the proximity of the detected user location.

Despite the teachings of these documents, there is still a need for improvement within the field.

The present invention addresses one or more of the above-mentioned issues.

### SUMMARY OF THE INVENTION

The present invention addresses the problem of simplifying for a user in a process control system to obtain relevant search results from a process control object search function.

This object is according to a first aspect of the invention achieved through a method according to claim 1.

This object is according to a second aspect of the invention achieved through a searching arrangement according to claim 6.

This object is according to a third aspect of the invention solved through a computer program product according to claim 12.

The present invention has a number of advantages. By considering the user position the users with wireless terminals are less limited by the keyboards and screen estate as the need to write long names can be reduced as well as the number of hits per search. It enables the filtering out of irrelevant search hits, which leads to a better utilization of the limited screen estate on a wireless terminal. The described solution will also increase the efficiency when searching; making it easier and faster to find objects the users are looking for. Users will more likely find the correct process control object as the number of options decreases based on the user position.

### BRIEF DESCRIPTION OF THE DRAWINGS

The present invention will in the following be described with reference being made to the accompanying drawings, where
Fig. 1 schematically shows a process control system operating an industrial process together with a wireless terminal associated with a user,
Fig. 2 schematically shows a block schematic of the wireless terminal,
Fig. 3 shows a first building of an industrial plant with a number of rooms, where the wireless terminal is in a first of the rooms,
Fig. 4 schematically shows a number of objects of a certain type in the plant together with a user position,
Fig. 5 shows a flow chart of a number of method steps being performed in a method for searching for process control objects,
Fig. 6 illustrates the application of a first type of position based search limitation in the plant of fig. 4,
Fig. 7 illustrates the application of a second type of position based search limitation in the plant of fig. 4,
Fig. 8 schematically shows a front view of the wireless terminal where search results are presented, and
Fig. 9 schematically shows a data carrier with computer program code, in the form of a CD-ROM disc, for performing the steps of the method.

### DETAILED DESCRIPTION OF THE INVENTION

In the following, a detailed description of preferred embodiments of a method, searching arrangement and a computer program product for searching after process control objects in a process control system will be given.

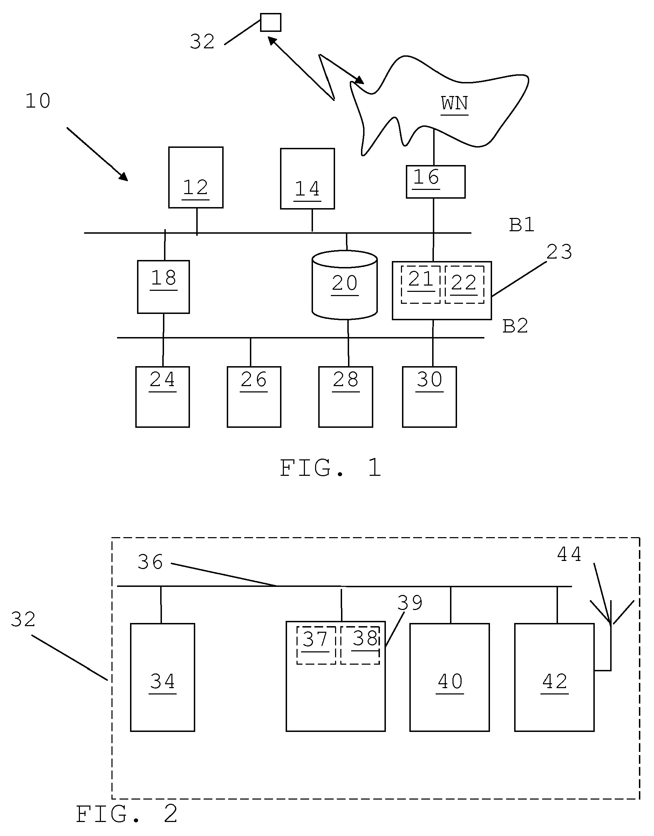

Fig. 1 schematically shows a process control system 10. The process control system 10 is a computerized process control system for controlling an industrial process. The process can be any type of industrial process, such as electrical power generation, transmission and distribution processes as well as water purification and distribution processes, oil and gas production and distribution processes, petrochemical, chemical, pharmaceutical and food processes, and pulp and paper production processes. These are just some examples of processes where the system can be applied. There exist countless other industrial processes. The processes may also be other types of industrial processes such as the manufacturing of goods. A process may be monitored through one or more process monitoring computers, which communicate with a server handling monitoring and control of the process.

In fig. 1 the process control system 10 therefore includes a number of process monitoring computers 12 and 14. These computers may here also be considered to form operator terminals and are connected to a first data bus B1. There is also a gateway 16 connected to this first data bus B1, which gateway 16 is connected to at least one wireless network WN. To the wireless network WN there is connected a wireless terminal 32. It should be realized that it is possible with more wireless terminals in the wireless network WN. However, only one is shown for simplifying the understanding of the present invention. The wireless network WN may be a local network, such as a wireless local area network (WLAN). It may also be a Bluetooth network, i.e. a network with a number of interconnected Bluetooth nodes.

There is furthermore a second data bus B2 and between the first and second data busses B1 and B2 there are connected a server 18 providing control and protection of the process and a database 20 where data relating to control and protection of the process is stored. Such data relating to control and protection may here comprise process data such as measurements and control commands, while data relating to protection may comprise alarm and event data as well as data on which alarms and events can be generated, such as measurements made in the process. The database 20 also comprises data about the various process control objects in the system, such as what type of objects they are, the positions they have and in what locations they are provided, such as in what building of a plant they are provided, where the process control system is at least in part provided in this plant. There is furthermore a searching server 23 connected between the two buses B1 and B2. The searching server 23 comprises a positioning block 21 and a searching block 22.

To the second data bus B2 there is furthermore connected a number of further devices 24, 26, 28 and 30. These further devices 24, 26, 28 and 30 are field devices, which are devices that are interfaces to the process being controlled. A field device is typically an interface via which measurements of the process are being made and to which control commands are given. Because of this the field devices are furthermore process control objects. In one variation of the invention a first field device is a first process control object 24, as an example a motor, and the second field device is a second process control object 26, as an example a boiler.

Fig. 2 shows a block schematic of the wireless terminal 32. The wireless terminal 32 comprises a bus 36 and to this bus there is connected a display 34, a program memory 39, a processor 40, as well as a radio communication circuit 42. The radio communication circuit 42 is furthermore connected to an antenna 44. The radio communication circuit 42 and antenna 44 are provided for communication with the wireless network WN.

In the program memory 39 there is provided optional software code or computer program instructions which when being run by the processor forms a positioning element 37 and a searching element 38.

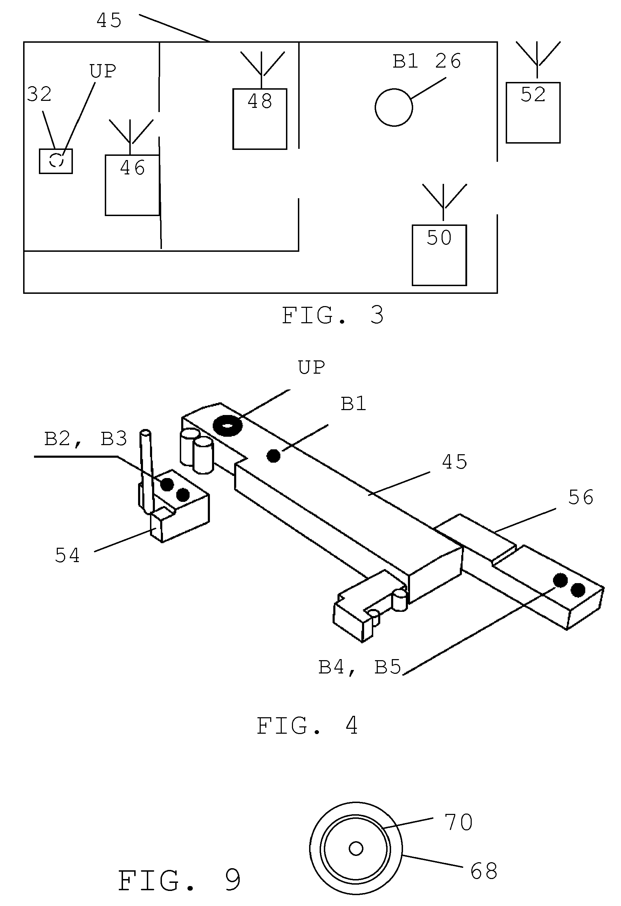

Fig. 3 schematically shows one first exemplifying building or facility 45 of the industrial plant. The building has a number of rooms. There is here a first room. In the first room there is a first wireless access point 46 of the wireless network. In this figure also the first wireless terminal 32 is located in the first room, which indicates that also a corresponding user is in this first room. The position of this wireless terminal is here also termed a user position UP. Next to the first room there is a second room with a second wireless access point 48. The second room in turn leads to a third larger room with a third wireless access point 50. In the third room there is a door leading out of the first building 45 and outside of the first building there is a fourth wireless access point 52. The access points 46, 48 50 and 52 are here furthermore located close to doors leading to or from the rooms. The first wireless access point 46 is therefore provided close to a door interconnecting the first and the second rooms, the second wireless access point 48 is located close to a door interconnecting the second and the third rooms, the third wireless access point 50 is provided close to the door leading out of the first building 45 and the fourth wireless access point 52 is provided close to the same door at the exterior of the first building 45. The above described access point positions close to doors are only exemplary. The invention is thus in no way limited to these positions. Others may be used.

In the first building there are furthermore a number of process control objects and one of these is a first boiler 26 B1 is provided in the third room. It should be realized that there may be several more process control objects in the first building 45. However, only this first boiler 26 is shown in order to be used for demonstrating the principles of the invention.

Furthermore the positions of the wireless access points 46, 48 and 50 and 52 are typically known and because of this also the positions of the wireless terminals and consequently the users may be known.

Fig. 4 schematically shows the first building 45 together with a second and third building 54 and 56. In these buildings there are also shown a number of objects of a certain type, i.e. of the same type, which objects in this example are also boilers. In the first building 45 the position of the first boiler B1 is schematically indicated. Furthermore, a second and third boiler B2 and B3 are provided in the second building 54 and a fourth and fifth boiler B4 and B5 are provided in the third building 56. Also the user position UP is indicated in the first building 45. Fig. 4 is also an example that is to be used in order to demonstrate various search limitations applied in a search function of the invention. It should therefore in no way be considered limiting.

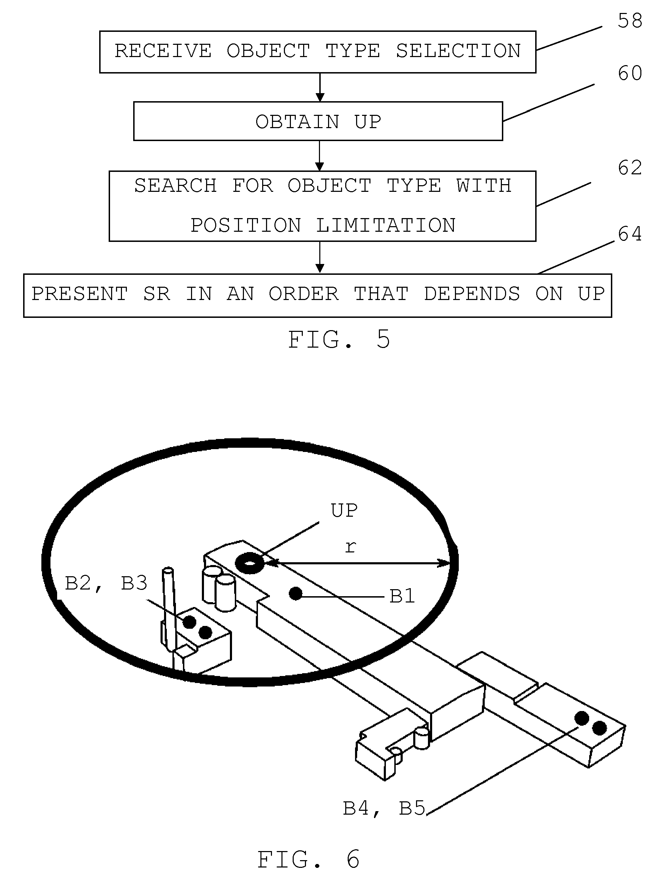

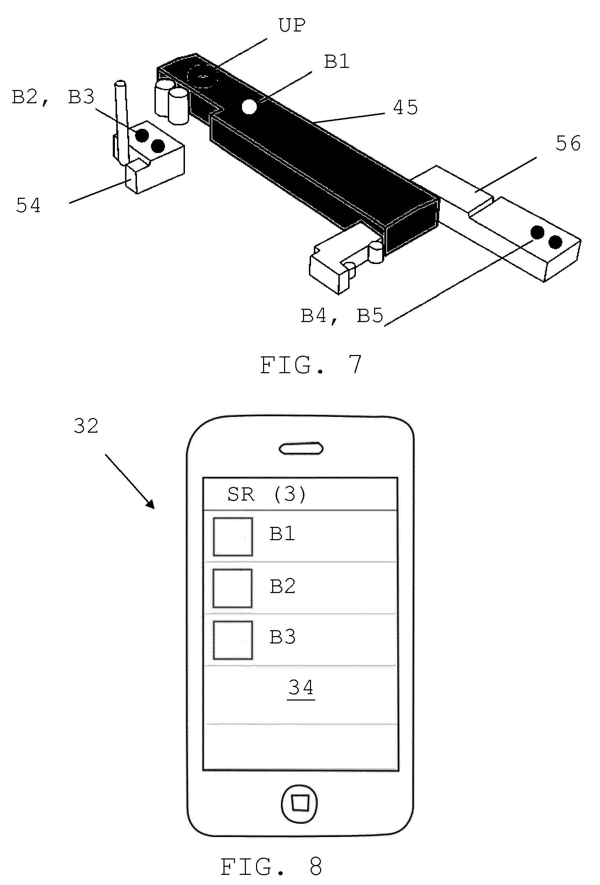

Two variations of the invention will now be described with reference also being made to fig. 5 - 8, where fig. 5 shows a flow chart of a number of method steps being performed in a method for searching for process control objects, fig. 6 illustrates the application of a first type of position based search limitation in the plant of fig. 4, fig. 7 illustrates the application of a second type of position based search limitation in the plant of fig. 4 and fig. 8 schematically shows a front view of the wireless terminal where search results are presented.

Some aspects of the invention are directed towards a searching arrangement comprising a searching unit and an optional positioning unit.

In some embodiments of the invention the positioning element 37 of the wireless terminal 32 forms a positioning unit. In other embodiments the positioning block 21 of the searching server 23 forms a positioning unit.

In some embodiments the searching element 38 of the wireless terminal 32 forms a searching unit. In other embodiments of the invention, the searching block 22 of the searching server 23 forms a searching unit.

The searching unit will furthermore typically access a database in the process control system, for instance database 20, in order to find items being searched.

It should also be realized that a searching arrangement may be provided through any combination of the above-mentioned searching unit with positioning unit. The searching arrangement may thus be provided through the searching element and positioning element of the wireless terminal, through the searching element of the wireless terminal and the positioning block of the searching server, through the positioning element of the wireless terminal and the searching block of the searching server or through the positioning block and the searching block of the searching server.

In the following an example of the invention will be described where the searching arrangement is provided through the wireless terminal of a user. The positioning element of this wireless terminal is therefore a positioning unit and the searching element of the terminal a searching unit.

Today most users of process automation software are using traditional desktop computers when interacting with the control system. These stationary computers can be located in different locations, for example in a control room or as terminals placed on the factory floor for quick access to the control system. With the prevalence of powerful wireless terminals it is now possible to interact with the process control system wherever the user is located. The most common way of accessing the control system today is by utilizing some form of remote desktop solution.

Factories and plants include a large amount of process devices. For instance, the number of boilers can be tens or hundreds. Workers furthermore usually have an access to a list of plant equipment in the system where they can search for certain devices.

In a process control system the number of process control objects may be great. A user, like a plant maintenance engineer, may not be required to know the location of them. However, he or she should be able to locate an object of interest fast and efficiently. One tool that may be used in such a locating activity is a search function. The plant maintenance engineer may enter a search term for a process control object and as a result receive data concerning process control objects of the searched type.

As wireless terminals have become more common, it is of interest to also use these for searching.

However, there are some problems associated with searching using wireless terminals.

Screen estate is very limited when compared to regular displays of desktop computers; because the display on a small wireless device may be very much smaller than the display screen of a desktop computer it is not possible to display the same amount of information on a wireless terminal display as on a stationary large desktop monitor.

The interaction techniques are different; inputting text on a wireless terminal may be done through touch interface using a virtual keyboard. Virtual keyboards are more prone to incorrect input and inputting characters is slower compared to hardware keyboards. The reasons for this are several; the individual keys are smaller on software keyboards for wireless terminals, and there is also no haptic feedback when pressing the software keys.

As factories typically include a large amount of different process control objects, it is very difficult to find a specific device in the long list of objects on a wireless terminal.

When users search on wireless terminal for process objects they are likely to search for objects that are physically close to them. In addition, when a user is doing a search for an object, the user might want to exclude objects that are physically far away in order to reduce the number of hits from the search.

The difference in available hardware and especially input possibilities can be a problem when users use wireless terminals to access process automation software built for desktop computers.

However, the wireless terminals available today are equipped with a lot of different sensors, such as Global Positioning System (GPS), Bluetooth, and Near Field Communication (NFC). Using these sensors as well as other communication systems it is possible to detect the position of the wireless terminal in a number of ways. If the process control system is also aware of the physical position of process control objects then it is possible to determine the distance between the process control object and the wireless terminal, i.e. the distance between the process control object and the user position UP. This is a feature that can help solve above-mentioned problem.

The invention is provided for addressing at least some of these issues.

A user in the plant, such as the above mentioned plant maintenance engineer, who carries a wireless terminal 32, may thus desire to locate an object using a search function provided via the wireless terminal 32. He or she may for instance want to locate a certain boiler without knowing exactly where this boiler is located. For this reason the user may access the searching element 38, which provides the above-mentioned search function. The access to the function is typically made via a user input unit that may be keypad. In this example it is a part of the display 40, which display is thereby a touch screen. The user is in the following also assumed to be at the user position UP in the first building 45.

When using the search function, the user then enters a selection of object type. He or she thus enters a first search term regarding an object in the process control system. The search term may be an object category, i.e. a process control object category, or an object type. The search may thereby be a search for a type of process control object that the user wants to find. An object type may be motor, a centrifuge, a valve or a tank. However in this example it is a boiler.

The search function provided in the searching element 38 thereby receives a first search term in the form of an object type selection, step 58. Thereafter the searching element 38 obtains the user position UP, step 60, i.e. the position of the user in the process control system. The user position may be obtained in a number of different ways. The object type selection may be provided in the form of a process control object name or a part of a name.

The user may manually enter the position via the user input unit. Through for instance indicating that he or she is in the first room in the first building 45 a position may be obtained that will be used in the search.

However it is also possible that the position is detected. The obtained user position may thus be an automatically detected position of the wireless terminal of the user. The position may be detected in a number of ways.

The positioning element 37 may detect the position via the wireless network WN. The position of the wireless terminal 32 may more particularly be obtained through knowledge of which wireless access point 46, 48, 50 and 52 the wireless terminal 32 is in contact with. The signal strength of the communication between the wireless terminal and access point may be used to determine the distance between the wireless terminal 32 and the access point, which gives a radius around the access point at which the wireless terminal may be located. This together with knowledge of the layout of the premises, such as where walls, floors and ceilings are provided, may be used for estimating the position. Furthermore, if a wireless terminal is in contact with more access points, then triangulation may be used. Here the points of intersection of the radiuses of two or three access points may be used for determining the position. Also this may be combined with knowledge of the layout of the premises in order to determine the position of the wireless terminal. In some instances it is also possible to use Global Positioning System (GPS).

The position may thus be detected by the positioning element 37 and then reported or provided to the search function of the searching element 38 as a user position UP. The searching element 38 thereby obtains the user position UP. The searching element 38 then searches for process control objects in the database 20 using the object type as a first search term and possibly also the user position UP as a second search term, step 62. The searching may here be done through searching in the database 20 for objects of the indicated type and also obtaining position data of these objects. In the search a limitation based on position may therefore be used. However, it is possible that the search is carried out without being limited to position, but with the results being subjected to sorting according to position.

A first search limitation principle based on position is depicted in fig. 6. According to this limitation the search is limited to objects of the specified type that are provided within a radius r of the user position UP. This means that only objects that are on a distance from the user position UP that is below a distance threshold are retrieved, where the distance threshold is the radius r. As can be seen in the example in fig. 6, this means that the first boiler B1 in the first building 45 will be obtained together with the second and third boiler B2 and B3 in the second building, because they are all within the radius r around the user position UP. However, the fourth and the fifth boiler B4 and B5 will not be obtained because they are outside of the radius.

A second limitation principle based on position is depicted in fig. 7. According to this limitation the search is limited to objects of the specified type that are provided within the building where the user is. As the user position UP is in the first building 45, this means that only the first boiler B1 will be obtained according to this principle, which can be seen in fig. 7. The searching element 38 may here have knowledge about the positions that provides the boundaries of the building, such as positions of walls. It may here limit the search to positions within these boundaries, which means that objects having positions that are also within these boundaries are fetched. As an alternative the searching element 38 may use such knowledge of the boundary of the building in order to determine in what building the user position UP is located and then locate objects of the search type that have indications in the database that are also in the same building.

When search results have been obtained, the searching element 38 then presents them via the display of the wireless terminal. The presentation of the results then depends on the user position. One positional dependency is caused by a search limitation. The fact that only process control objects with a relationship to the user position are searched is thus one positional dependency. In the variations described here the search function furthermore sorts and presents the search results SR, i.e. the found process control objects, in an order that depends on the user position, step 64.

This is shown for a search having been performed according to the first limitation principle in fig. 8. As can be seen the three found boilers B1, B2 and B3 are shown with the closest on top, which is the first boiler B1, followed by the second and third boilers B2 and B3. The objects are thus presented in an order that depends on the user position. In this example they are presented in an ascending order, i.e. with the closest object first and thereafter follows an object at ever increasing distances from the user position UP. The objects closest to the user position are thus presented first in the order.

It is possible to present only the best results of the search together with the possibility for the user to select further objects. This means that the user may select further objects through a suitable selection in the view of the best results.

The presentation according to order can be applied in both the above described search strategies. However, it is also possible that it is applied for a search where no search limitation strategy is used. It is thus possible that a search is made without limiting to any positions. However, the results of the search are then sorted and presented according to position in an ascending order.

It is furthermore possible that the sorting based on position is not used at all. It may thus be omitted. As the search has been made based on position, there may be no need if the search results are limited.

Three different approaches for handling searches where proximity is a factor were described:
1. In Figure 6, which depicts the first approach, a specified a maximum distance (r) between a "Boiler" and the user position was used. Therefore only Boilers #1-3 were returned in the search result. By varying the search radius it is possible to increase or decrease the number of search results.
2. The second approach provided the possibility to search based on the user's current area. This approach provides a search limited to a specific building. In this case the search is limited to only include results from the building the user is currently located in, see Figure 7. A search for "Boiler" performed with this method will only return Boiler #1.
3. The third approach uses a search for all objects. However the search results are listed in the order of their proximity to the user. The difference to the first alternative is that with this method there would be no maximum radius, all available boilers will be displayed, but they will be listed in the order of their proximity from the user.

When using approach 1 and 2 a good feature is the possibility to list objects that were found in the search but were decided to be outside the proximity range/wrong building. By listing how many of these objects were found this can give the users a quick way to access the objects and it might not be necessary to do another search in case the search radius was too small.

The radius may be adaptive in that it may be extended if no or only a few objects are detected within it. In the same way it may also be decreased if many objects are found within it.

The invention has a number of advantages, of which some are mentioned below.

By giving the users the possibility to add location as a search criteria the users with wireless terminals are less limited by the keyboards and screen estate as the need to write long names can be reduced as well as the number of hits per search.

By implementing the described search functionality it would allow users with wireless terminal in industrial settings to filter out irrelevant search hits. This leads to a better utilization of the limited screen estate on the wireless terminal.

It requires less typing from users. As the number of search hits can be greatly reduced it is not necessary to write the full object name.

Users are able to quickly find the correct process control object based on location in a long list of process control objects.

The described solution will also increase the efficiency when searching; making it easier and faster to find the objects the users are looking for.

Users will more likely find the correct process control object as the number of options decreases based on the search by location.

The positioning unit and searching unit may be provided in the form of one or more processors together with computer program memory including computer program code for performing their functions. As an alternative they may be provided in the form of one or more Application Specific Integrated Circuits (ASIC) or Field-Programmable Gate Arrays (FPGA). This computer program code may also be provided on one or more data carriers which perform the functionality of the present invention when the program code thereon is being loaded into one or more devices implementing the searching arrangement, such as the searching server and/or the wireless terminal. One such data carrier 68 with computer program code 70, in the form of a CD ROM disc, is schematically shown in fig. 9. Such computer program may as an alternative be provided on another server and downloaded therefrom into the searching server and/or the mobile terminal.

The invention can be varied in many more ways than the ones already mentioned.

It is for instance possible that the wireless terminal detects the identities of objects passed by the wireless terminal. The detection may be done using a suitable short range communication unit employing a short range communication technique such as NFC, bar code reading or Bluetooth. One or more detected identities may then be appended as further search terms in a search.

As a result also the devices having these identities would end up in the search results. The identities may be collected, for instance automatically, as the user directs the wireless terminal towards an object of interest. The collection may furthermore be made well before the search is started and need thus not be related to the user position. A user may as a part of the search function select to append previously stored and detected object identities. Therefore the search function may further obtain at least one process control object identity having been detected by the short range communication unit. The search function may then use this at least one detected identity as a further search term of the search. In this way the user input via the display is also further reduced.

It should therefore be realized that the present invention is only to be limited by the following claims.

## Claims

1. A method for searching process control objects in a search function provided in a searching arrangement of a process control system (10) the method comprising:
- receiving (58) a first search term entered by a user regarding process control objects in the process control system,
- obtaining (60) the position (UP) of the user in the process control system through obtaining an automatically detected position of a wireless terminal (32) of the user,
- searching (62) for process control objects in a database (20) comprising data about the various process control objects in the system using the first search term and with a limitation to objects with a distance to the user position (UP) that is within a distance threshold (r), and
- presenting (64) the results of the search, where the presented results depend on the user position,
- the method also comprising obtaining at least one process control object identity having been detected by a short range communication unit as the wireless terminal has passed by the process control object and using said identity as a further search term of the search.

2. The method according to claim 1, wherein the step of obtaining the user position comprises detecting the position of the wireless terminal and providing the position to the searching function as user position.

3. The method according to any previous claim, wherein the presentation is a presentation of process control objects (B1, B2, B3) in an order that depends on the user position.

4. The method according to claim 3, wherein process control objects closest to the user position are presented first in the order.

5. The method according to any previous claim, wherein the first search term is a process control object category.

6. A searching arrangement for searching for process control objects in a process control system (10), the searching arrangement comprising:
a searching unit (22; 38) providing a search function configured to
receive a first search term entered by a user regarding process control objects in the process control system, obtain the position (UP) of the user in the process control system, where the obtained user position is an automatically detected position of a wireless terminal (32) of the user
search for process control objects in a database (20) comprising data about the various process control objects in the system using the first search term with a limitation to process control objects with a distance to the user position that is within a distance threshold (r), and
present the results of the search, where the presented results depend on the user position,
wherein the searching unit is further configured to obtain at least one process control object identity having been detected by a short range communication unit as the wireless terminal has passed by the process control object and use said identity as a further search term of the search.

7. The searching arrangement according to claim 6, further comprising a position unit (37; 21) configured to detect the position of the wireless terminal and provide the position to the searching unit (22; 38) as user position.

8. The searching arrangement according to claim 6 or 7, wherein the searching unit with search function is configured to present process control objects (B1, B2, B3) in an order that depends on the user position.

9. The searching arrangement according to claim 8, wherein process control objects closest to the user position are presented first in the order.

10. The searching arrangement according to any of claims 6 - 9, wherein the first search term is a process control object category.

11. The searching arrangement according to any of claims 6 - 10, further comprising a display (34) for presenting the search results.

12. A computer program product for searching for process control objects in a process control system, said computer program product being provided on a data carrier (68) comprising computer program code (70) configured to cause a searching arrangement to, when said computer program code is loaded into at least one device (23; 32) providing the searching arrangement, perform all the steps of the method of claim 1.

## Patentansprüche

1. Verfahren zur Suche von Prozesssteuerobjekten in einer Suchfunktion, die in einer Suchanordnung eines Prozesssteuersystems (10) bereitgestellt ist, wobei das Verfahren Folgendes umfasst:
- Empfangen (58) eines ersten Suchbegriffs, der von einem Benutzer bezüglich der Prozesssteuerobjekte in das Prozesssteuersystem eingegeben wird,
- Einholen (60) der Position (UP) des Benutzers im Prozesssteuersystem durch Einholen einer automatisch erkannten Position eines Drahtlos-Endgerätes (32) des Benutzers,
- Suchen (62) nach Prozesssteuerobjekten in einer Datenbank (20), die Daten über die verschiedenen Prozesssteuerobjekte im System umfasst, mit Hilfe des ersten Suchbegriffs und mit einer Beschränkung auf Objekte mit einer Entfernung zur Benutzerposition (UP), die innerhalb eines Entfernungsgrenzwertes (r) liegt, und
- Darstellen (64) der Ergebnisse der Suche, wobei die dargestellten Ergebnisse von der Benutzerposition abhängen,
- wobei das Verfahren außerdem das Einholen mindestens einer Prozesssteuerobjekt-Identität, die durch eine Nahbereich-Kommunikationseinheit erkannt wurde, während das Drahtlos-Endgerät am Prozesssteuerobjekt vorbeigeführt wurde, und das Verwenden der Identität als einen weiteren Suchbegriff der Suche umfasst.

2. Verfahren nach Anspruch 1, wobei der Schritt des Einholens der Benutzerposition das Erkennen der Position des Drahtlos-Endgerätes und das Bereitstellen der Position für die Suchfunktion als Benutzerposition umfasst.

3. Verfahren nach einem der vorhergehenden Ansprüche, wobei die Darstellung eine Darstellung von Prozesssteuerobjekten (B1, B2, B3) in einer Reihenfolge ist, die von der Benutzerposition abhängt.

4. Verfahren nach Anspruch 3, wobei die der Benutzerposition nächstgelegenen Prozesssteuerobjekte in der Reihenfolge zuerst dargestellt werden.

5. Verfahren nach einem der vorhergehenden Ansprüche, wobei der erste Suchbegriff eine Prozesssteuerobjekt-Kategorie ist.

6. Suchanordnung zum Suchen von Prozesssteuerobjekten in einem Prozesssteuersystem (10), wobei die Suchanordnung Folgendes umfasst:
eine Sucheinheit (22, 38), die eine Suchfunktion bereitstellt, die für Folgendes konfiguriert ist:
Empfangen eines ersten Suchbegriffs, der von einem Benutzer bezüglich der Prozesssteuerobjekte in das Prozesssteuersystem eingegeben wird,
Einholen der Position (UP) des Benutzers im Prozesssteuersystem, wobei die eingeholte Benutzerposition eine automatisch erkannte Position eines Drahtlos-Endgerätes (32) des Benutzers ist,
Suchen nach Prozesssteuerobjekten in einer Datenbank (20), die Daten über die verschiedenen Prozesssteuerobjekte im System umfasst, mit Hilfe des ersten Suchbegriffs und mit einer Beschränkung auf Prozesssteuerobjekte mit einer Entfernung zur Benutzerposition, die innerhalb eines Entfernungsgrenzwertes (r) liegt, und
Darstellen der Ergebnisse der Suche, wobei die dargestellten Ergebnisse von der Benutzerposition abhängen,
wobei die Sucheinheit ferner dafür konfiguriert ist, mindestens eine Prozesssteuerobjekt-Identität einzuholen, die durch eine Nahbereich-Kommunikationseinheit erkannt wurde, während das Drahtlos-Endgerät am Prozesssteuerobjekt vorbeigeführt wurde, und die Identität als einen weiteren Suchbegriff der Suche zu verwenden.

7. Suchanordnung nach Anspruch 6, ferner eine Positionseinheit (37, 21) umfassend, die dafür konfiguriert ist, die Position eines Drahtlos-Endgerätes zu erkennen und die Position für die Sucheinheit (22, 38) als Benutzerposition bereitzustellen.

8. Suchanordnung nach Anspruch 6 oder 7, wobei die Sucheinheit mit Suchfunktion dafür konfiguriert ist, Prozesssteuerobjekte (B1, B2, B3) in einer Reihenfolge darzustellen, die von der Benutzerposition abhängt.

9. Suchanordnung nach Anspruch 8, wobei die der Benutzerposition nächstgelegenen Prozesssteuerobjekte in der Reihenfolge zuerst dargestellt sind.

10. Suchanordnung nach einem der Ansprüche 6 bis 9, wobei der erste Suchbegriff eine Prozesssteuerobjekt-Kategorie ist.

11. Suchanordnung nach einem der Ansprüche 6 bis 10, ferner einen Anzeigebildschirm (34) zum Darstellen der Suchergebnisse umfassend.

12. Computerprogrammprodukt zum Suchen von Prozesssteuerobjekten in einem Prozesssteuersystem, wobei das Computerprogrammprodukt auf einem Datenträger (68) bereitgestellt ist, der Computerprogrammcode (70) umfasst, der dafür konfiguriert ist, eine Suchanordnung zu veranlassen, alle Schritte des Verfahrens nach Anspruch 1 auszuführen, wenn der Computerprogrammcode in mindestens ein Gerät (23, 32) geladen ist, das die Suchanordnung bereitstellt.

## Revendications

1. Procédé permettant de rechercher des objets de commande de processus dans une fonction de recherche fournie dans un dispositif de recherche d'un système de commande de processus (10), le procédé comprenant les étapes suivantes :
- recevoir (58) un premier terme de recherche entré par un utilisateur concernant des objets de commande de processus dans le système de commande de processus,
- obtenir (60) la position (UP) de l'utilisateur dans le système de commande de processus en acquérant une position détectée automatiquement d'un terminal sans fil (32) de l'utilisateur,
- rechercher (62) des objets de commande de processus dans une base de données (20) comportant des données relatives aux divers objets de commande de processus dans le système en utilisant le premier terme de recherche et en se limitant aux objets situés à une distance par rapport à la position utilisateur (UP) qui est à l'intérieur d'un seuil de distance (r), et
- présenter (64) les résultats de la recherche, les résultats présentés dépendant de la position utilisateur,
- le procédé comprenant également : obtenir au moins une identité d'objet de commande de processus ayant été détectée par une unité de communication à courte portée lorsque le terminal sans fil est passé par l'objet de commande de processus et utiliser ladite identité comme un autre terme de recherche de la recherche.

2. Procédé selon la revendication 1, dans lequel l'étape consistant à obtenir la position utilisateur comprend : détecter la position du terminal sans fil et fournir la position à la fonction de recherche comme une position utilisateur.

3. Procédé selon l'une quelconque des revendications précédentes, la présentation étant une présentation d'objets de commande de processus (B1, B2, B3) dans un ordre qui dépend de la position utilisateur.

4. Procédé selon la revendication 3, dans lequel les objets de commande de processus les plus proches de la position utilisateur sont présentés les premiers dans l'ordre.

5. Procédé selon l'une quelconque des revendications précédentes, dans lequel le premier terme de recherche est une catégorie d'objet de commande de processus.

6. Dispositif de recherche permettant de rechercher des objets de commande de processus dans un système de commande de processus (10), le dispositif de recherche comprenant :
une unité de recherche (22 ; 38) fournissant une fonction de recherche configurée pour :
recevoir un premier terme de recherche entré par un utilisateur concernant des objets de commande de processus dans le système de commande de processus,
obtenir la position (UP) de l'utilisateur dans le système de commande de processus, la position utilisateur obtenue étant une position détectée automatiquement d'un terminal sans fil (32) de l'utilisateur
rechercher des objets de commande de processus dans une base de données (20) comportant des données relatives aux divers objets de commande de processus dans le système en utilisant le premier terme de recherche en se limitant aux objets de commande de processus situés à une distance par rapport à la position utilisateur qui est à l'intérieur d'un seuil de distance (r), et
présenter les résultats de la recherche, les résultats présentés dépendant de la position utilisateur,
l'unité de recherche étant en outre configurée pour obtenir au moins une identité d'objet de commande de processus ayant été détectée par une unité de communication à courte portée lorsque le terminal sans fil est passé par l'objet de commande de processus et utiliser ladite identité comme un autre terme de recherche de la recherche.

7. Dispositif de recherche selon la revendication 6, comprenant en outre une unité de position (37 ; 21) configurée pour détecter la position du terminal sans fil et fournir la position à l'unité de recherche (22 ; 38) comme une position utilisateur.

8. Dispositif de recherche selon la revendication 6 ou 7, dans lequel l'unité de recherche avec une fonction de recherche est configurée pour présenter des objets de commande de processus (B1, B2, B3) dans un ordre qui dépend de la position utilisateur.

9. Dispositif de recherche selon la revendication 8, dans lequel les objets de commande de processus les plus proches de la position utilisateur sont présentés les premiers dans l'ordre.

10. Dispositif de recherche selon l'une quelconque des revendications 6 - 9, dans lequel le premier terme de recherche est une catégorie d'objet de commande de processus.

11. Dispositif de recherche selon l'une quelconque des revendications 6 - 10, comprenant en outre un écran (34) pour présenter les résultats de recherche.

12. Produit programme d'ordinateur permettant de rechercher des objets de commande de processus dans un système de commande de processus, ledit produit programme d'ordinateur étant fourni sur un support de données (68) comprenant un code de programme d'ordinateur (70) configuré pour amener un dispositif de recherche, lorsque ledit code de programme d'ordinateur est chargé dans au moins un dispositif (23 ; 32) fournissant le dispositif de recherche, à exécuter toutes les étapes du procédé de la revendication 1.
